# EUROPÄISCHE PATENTSCHRIFT

(11) **EP 3 969 229 B1**
(45) Veröffentlichungstag und Bekanntmachung des Hinweises auf die Patenterteilung: **03.09.2025**
(21) Anmeldenummer: 20724014.4
(22) Anmeldetag: 28.04.2020
(51) Int. Cl.: B25J 5/02, B25J 9/00

(54) **ANLAGE SOWIE VERFAHREN ZUR BETÄTIGUNG EINER VERFAHREINHEIT DER ANLAGE**
SYSTEM, AND METHOD FOR ACTUATING A TRAVEL UNIT OF THE SYSTEM
INSTALLATION AINSI QUE PROCÉDÉ D'ACTIONNEMENT D'UNE UNITÉ DE DÉPLACEMENT DE L'INSTALLATION

(30) Priorität: 17.05.2019 DE 102019207270
(43) Veröffentlichungstag der Anmeldung: 23.03.2022
(73) Patentinhaber: VOLKSWAGEN AKTIENGESELLSCHAFT, 38440 Wolfsburg (DE)
(72) Erfinder: SAATHOFF, Hartmut, 26624 Südbrookmerland (DE); JELDEN, Christian, 26723 Emden (DE); SMIT, Heiko, 26802 Moormerland (DE); ARNOLD, Mathias, 26121 Oldenburg (DE)
(86) Internationale Anmeldenummer: PCT/EP2020/061801
(87) Internationale Veröffentlichungsnummer: WO 2020/233954

(56) Entgegenhaltungen:
- DD-A1- 224 567
- FR-A1- 2 641 223
- JP-A- H0 516 849
- JP-A- H08 141 945

## Beschreibung

Die Erfindung betrifft eine Anlage aufweisend eine Fördereinrichtung zur Bewegung eines Werkstücks entlang eines Förderwegs sowie aufweisend eine Verfahreinrichtung mit einer Verfahreinheit zur Bewegung einer Last entlang eines zum Förderweg benachbart ausgeführten Verfahrwegs. Hierbei weisen die Verfahreinheit zur Aufnahme der Last eine Lastaufnahmeeinrichtung und die Anlage zur Kopplung der Bewegungen von Werkstück und Last entlang des Förderwegs und des Verfahrwegs zumindest einen Messaufnehmer auf. Der Messaufnehmer ist dabei ein an der Lastaufnahmeeinrichtung angeordneter Kraftaufnehmer und die Lastaufnahmeeinrichtung durch pneumatische Betätigung der Verfahreinheit zudem bewegbar ausgebildet.

Weiterhin betrifft die Erfindung ein Verfahren zur pneumatischen Betätigung der Verfahreinheit der Anlage.

In vielen Industriezweigen und hierbei insbesondere im Kraftfahrzeugbau ist zur Herstellung von Erzeugnissen wie Kraftfahrzeugen eine oftmals unter kontinuierlicher Bewegung der herzustellenden Erzeugnisse ausgeführte Fließfertigung etabliert, bei welcher die zur Herstellung notwendigen Produktionsmittel in einer Fließrichtung nacheinander angeordnet sind.

Der Transport der herzustellenden Erzeugnisse erfolgt dabei über Fördersysteme wie z. B. Förderbänder, Rollenförderer, Schubskid-Systeme, Gehängesysteme oder auch fahrerlose Transportfahrzeuge.

Eine unkonventionelle Möglichkeit zum Transport der herzustellenden Erzeugnisse beschreibt hingegen die DE 10 2016 002 812 A1, welche eine Bearbeitungsanlage offenbart, bei welcher die Arbeitsschritte zur Herstellung der Erzeugnisse je Fertigungsstation und zudem der Transport der Erzeugnisse zwischen den einzelnen Fertigungsstationen entlang einer Fertigungslinie über ein jeweiliges Robotersystem der Fertigungsstation erfolgen. Hierbei sind die Robotersysteme zwar bewegbar ausgebildet, jedoch je Fertigungsstation ortsfest zur Fertigungslinie aufgestellt.

Aufgrund einer vorliegenden, kontinuierlichen Bewegung der Erzeugnisse ist es zudem jedoch regelmäßig notwendig, auch Produktionsmittel wie Werkzeuge in Fließrichtung zu bewegen, um insbesondere automatisierte Produktionsprozesse innerhalb einer vorgegebenen Taktzeit durchführen zu können.

Eine Bearbeitungsanlage, bei welcher sich ein Produktionsmittel parallel zur Fließrichtung bewegt, wird durch die DE 10 2007 045 143 A1 offenbart. Hierbei ist ein Industrieroboter entlang eines Roboterwegs bewegbar ausgeführt, wobei der Roboterweg parallel zu einem Förderweg eines herzustellenden Erzeugnisses ausgerichtet ist und möglichst kein Versatz zwischen der Position des Industrieroboters und des Erzeugnisses aufgrund unterschiedlicher Bewegungen entlang der Wege erfolgen soll, da der Industrieroboter der Positionierung von Bauteilen im Bereich des Erzeugnisses respektive der Bearbeitung des Erzeugnisses dient. Eine möglichst gleichartige Bewegung von Erzeugnis und Industrieroboter wird dabei insbesondere durch eine mechanische Kopplung der jeweiligen Antriebe von Erzeugnis und Industrieroboter realisiert. Alternativ kann eine elektronische Kopplung zwischen den Antrieben vorgesehen sein, wobei dann entsprechende Geschwindigkeits-, Positions- oder Bewegungssensoren vorgesehen sind, um den Gleichlauf zu überwachen.

Eine Bewegung eines solchen Industrieroboters erfolgt in der Regel über elektrisch angetriebene Verfahrachsen, welche jedoch steuerungstechnisch aufwendig in einer Fertigungslinie auf die Liniengeschwindigkeit synchronisiert werden müssen. Überdies verfügen auch die die Erzeugnisse transportierenden Fördersysteme für gewöhnlich über elektrische Antriebe.

Im Bereich der Positionierung sind neben den erwähnten elektrischen Antrieben auch weitere Antriebskonzepte bekannt. Beispielsweise beschreibt die EP 0 181 415 A1 eine Positioniereinrichtung für kolbenstangenlose Zylinder, bei welcher ein über Umlenkrollen in den pneumatisch betriebenen Zylinder einlaufendes Band mit einem innerhalb des Zylinders angordneten, ein- oder zweiseitig druckbeaufschlagbaren Kolben verbunden ist und über den Kolben erzeugte Kräfte über einen am Band angeordneten Schlitten abgegeben werden können. Eine relative Positionierung des Schlittens wird hierbei über ein am Zylinder angeordnetes Magnetband mit in das Magnetband eingeprägten magnetischen Markierungen erreicht, wobei über einen am Schlitten angebrachten Sensor bei Überschreiten der magnetischen Markierungen elektrische Impulse erzeugt werden.

Der FR 2 641 223 A1 ist eine Produktionslinie zu entnehmen, bei welcher Kraftfahrzeuge jeweils mittels eines über einen Servomotor angetriebenen Schienenförderwagens entlang eines Förderwegs transportiert werden. Parallel zum Förderweg sind abschnittsweise Fertigungsstationen angeordnet, welche einen auf einem verfahrbaren Träger angeordneten Roboter zur Durchführung von Fertigungsprozessen aufweisen. Der Träger ist dabei über einen entlang des Förderwegs verlaufenden Linearmotor verfahrbar. Zur Kopplung der Bewegungen des Schienenförderwagens und des Trägers ist sowohl am Schienenförderwagen als auch parallel zum Linearmotor ein Maßstab mit einem magnetisch oder optisch hinterlegten Code angeordnet. Der jeweilige Code wird über Detektoren erfasst und mittels eines Steuergeräts, das aus den erfassten Signalen gebildete Differenzsignal zur Ansteuerung der Motoren verwendet und dabei zu Null geregelt, wodurch der Träger dem Schienenförderwagen folgt.

Die DD 224 567 A1 beschreibt insbesondere zum Zweck des Be- und Entladens eine Vorrichtung zum automatischen Ausrichten von Industrierobotern und Handhabegeräten zu Transportmitteln. Hierfür ist an den Transportmitteln eine Ausrichtmarke angeordnet, deren Länge der Abstelltoleranz der Transportwagen entspricht. Die Vorrichtung weist zudem zwei in Höhe und parallel zur Ausrichtmarke angeordnete, induktive Sensoren auf, deren Abstand zueinander mit der Summe der Abstelltoleranz und dem Schaltabstand der Sensoren übereinstimmt. Die Vorrichtung, die auch den Industrieroboter oder das Handhabegerät trägt, wird zum Ausrichten sodann solange über einen elektrischen, pneumatischen oder hydraulischen Antrieb verschoben, bis jeder der Sensoren kein der Ausrichtmarke zuzuordnendes Messsignal mehr ausgibt. In diesem Fall ist die Ausrichtmarke entsprechend zwischen den Sensoren positioniert und die Vorrichtung gegenüber dem Transportmittel ausgerichtet.

Aus der gattungsbildenden JP H05 - 16 849 A ist zudem eine Fertigungsstraße bekannt, welche einen Fließbandförderer zur Bewegung eines Kraftfahrzeugs entlang eines Förderwegs aufweist. Darüber hinaus weist die Fertigungsstraße eine Transporteinrichtung auf, über welche eine Last, hier Werkzeuge zur Bearbeitung, parallel zum Förderweg des Kraftfahrzeugs bewegbar ist. An der Transporteinrichtung ist dabei zur Kopplung der Bewegungen des Kraftfahrzeugs, hier insbesondere einer Scheibe des Kraftfahrzeugs und der Transporteinrichtung entlang des Förderwegs, ein Kraftaufnehmer in Form eines mit der Scheibe in Kontakt tretenden Schwenkarms angeordnet. Dabei wird über den Schwenkarm ein pneumatischer Antrieb der Transporteinrichtung derart gesteuert, dass die Transporteinrichtung dem Kraftfahrzeug entlang des Förderwegs bis zu einem Anschlag folgt.

Eine mechanische Kopplung belastet jedoch regelmäßig das eingesetzte Fördersystem und erhöht somit dessen Verschleiß. Elektrische Antriebe hingegen müssen für gewöhnlich zudem aufwendig auf die Geschwindigkeit der Fertigungslinie synchronisiert werden.

Vor diesem Hintergrund liegt der Erfindung die Aufgabe zugrunde, eine Anlage der eingangs genannten Art derart auszuführen und ein Verfahren zur Verfügung zu stellen, so dass der Verschleiß der Anlage minimiert und eine aufwendige Synchronisierung mit einer Fertigungslinie vermieden werden.

Diese Aufgabe wird gelöst mit einer Anlage gemäß den Merkmalen des Patentanspruchs 1. Die zugehörigen Unteransprüche betreffen besonders zweckmäßige Weiterbildungen der Erfindung.

Erfindungsgemäß ist also eine Anlage - oder ein Abschnitt einer Anlage zur Manipulation und/oder zur Vermessung eines Werkstücks - vorgesehen, welche eine Fördereinrichtung zur Bewegung eines Werkstücks entlang eines Förderwegs sowie eine Verfahreinrichtung mit einer Verfahreinheit zur Bewegung einer Last entlang eines zum Förderweg benachbart ausgeführten Verfahrwegs aufweist. Die Fördereinrichtung kann dabei als ein sich entlang eines Förderbands, eines Rollenförderers oder eines Gehängesystems bewegendes Fördermittel oder auch als Schubskid ausgebildet sein, wobei das Förderband, der Rollenförderer oder auch das Gehängesystem den Förderweg ausbilden können. Bevorzugt ist die Fördereinrichtung jedoch als ein fahrerloses Transportfahrzeug ausgeführt. Erfindungsgemäß weisen die Verfahreinheit ihrerseits zur Aufnahme der Last weiterhin eine Lastaufnahmeeinrichtung und die Anlage - oder der Abschnitt der Anlage - zur Kopplung - oder auch Synchronisierung - der Bewegungen von Werkstück und Last entlang des Förderwegs und des Verfahrwegs zumindest einen Messaufnehmer auf. Überdies ist der - eine - Messaufnehmer erfindungsgemäß ein - mittelbar oder unmittelbar - an der Lastaufnahmeeinrichtung angeordneter Kraftaufnehmer, wobei die Lastaufnahmeeinrichtung durch pneumatische Betätigung der Verfahreinheit - insbesondere doppeltwirkend - bewegbar ausgebildet ist. Es soll hierbei entsprechend vorgesehen sein, dass der Kraftaufnehmer die Fördereinrichtung und/oder das Werkstück antastet, um die Bewegungen der Last sowie des Werkstücks miteinander zu koppeln und somit aufeinander abgestimmte, gleichlaufende, synchrone Bewegungen zu ermöglichen. Hierbei sollten der Verfahrweg und der Förderweg im Wesentlichen gleichgerichtet ausgebildet sein, wobei zwischen Verfahrweg und Förderweg im Maximum eine Abstandsänderung auftreten sollte, welche eine Manipulation und/oder Vermessung des Werkstücks durch die Last nicht behindert. Denkbar ist hierbei, dass Förderweg und/oder Verfahrweg eine Krümmung aufweisen, wobei die durch die Krümmung bedingte Abstandsänderung jedoch durch die Last ausgeglichen werden kann. Bevorzugt sind jedoch Verfahrweg und Förderweg linear und parallel zueinander ausgeführt. Die pneumatische Betätigung der Verfahreinheit ermöglicht vorteilhaft eine einfache Synchronisation der Bewegung der Last mit der Bewegung des Werkstücks, da insbesondere gegenüber einer elektrischen Aktuierung der Verfahreinheit keine aufwendige Steuerungstechnik, besonders in Form von Hard- und Software, benötigt wird.

Die durch die Verfahreinheit der Verfahreinrichtung bewegte Last kann dabei insbesondere ein Werkzeug, ein Messmittel, ein Manipulator, ein Manipulator mit einem Werkzeug oder einem Messmittel und bevorzugt ein Industrieroboter sein, wobei der Industrieroboter wiederum ein Werkzeug aufweisen kann, mittels welches beispielsweise zu Montage- oder Einbauzwecken ein Bauteil im Bereich des Werkstücks positioniert wird oder welches der Bearbeitung oder der Vermessung des Werkstücks dient.

Es ist denkbar, dass die Verfahreinheit hierbei als ein pneumatisch betätigter Arbeitszylinder ausgebildet ist oder einen solchen pneumatisch betätigten Arbeitszylinder als Stellglied aufweist. Die Lastaufnahmeeinrichtung der Verfahreinheit kann dabei am Kolben des Arbeitszylinders angeordnet oder der Kolben als Bestandteil der Lastaufnahmeeinrichtung und somit durch pneumatische Betätigung der Verfahreinheit bewegbar ausgebildet sein.

Ferner ist an den Enden der Verfahreinheit erfindungsgemäß je wenigstens ein Endschalter angeordnet, über welchen vorteilhaft das Erreichen eines jeweiligen Endes des durch die Verfahreinheit zur Verfügung gestellten Verfahrwegs detektierbar ist und hierüber beispielsweise eine Steuerung oder Regelung eines Bewegungsablaufs der Last und/oder der Lastaufnahmeeinrichtung sowie einer gegebenenfalls vorgesehenen pneumatisch betätigten Schwenkbewegung des Kraftaufnehmers realisiert werden kann. Die Endschalter können dabei insbesondere als Rollenendschalter ausgeführt sein.

Darüber hinaus erfolgt die Betätigung der Verfahreinheit - somit der Bewegung der Last und/oder der Lastaufnahmeeinrichtung - und/oder des Pneumatikzylinders erfindungsgemäß in Abhängigkeit der Aktivierung der Endschalter. Neben der Betätigung der Verfahreinheit und somit der Bewegung der Last und/oder der Lastaufnahmeeinrichtung in Abhängigkeit der Aktivierung des Kraftaufnehmers und der damit verbundenen Kopplung der Bewegung der Last und des Werkstücks wäre demnach die Betätigung der Verfahreinheit und/oder des Pneumatikzylinders zudem abhängig von der Aktivierung der Endschalter, wodurch sich in konstruktiv vorteilhafter Weise ein vollautomatischer Bewegungsablauf von Last und/oder Lastaufnahmeeinrichtung sowie des gegebenenfalls an dem Pneumatikzylinder angeordneten Kraftaufnehmers verwirklichen ließe.

In einer besonders vorteilhaften Weiterbildung der Erfindung weist die Lastaufnahmeeinrichtung einen Arm auf, über welchen der Kraftaufnehmer an der Verfahreinheit angeordnet ist, was dazu führen sollte, dass der Kraftaufnehmer in den Förderweg der Fördereinrichtung ragt und somit in vorteilhaft einfacher Weise das Werkstück und/oder die Fördereinrichtung antasten kann.

Günstig stellt es sich ebenso dar, wenn der Kraftaufnehmer über eine pneumatische Betätigung schwenkbeweglich an der Verfahreinheit angeordnet ist. Dies kann beispielsweise vorteilhaft dazu beitragen, dass der am Arm der Lastaufnahmeeinrichtung angeordnete Kraftaufnehmer, welcher somit in den Förderweg hineinragt, bei einer gegensätzlichen Bewegung von Werkstück und Last und/oder Fördereinrichtung und Verfahreinheit aus dem Förderweg verschwenkt werden kann, sodass keine Kollision zwischen Kraftaufnehmer und Werkstück und/oder Fördereinrichtung auftritt. Insbesondere sollte der Kraftaufnehmer hierbei an dem an der Lastaufnahmeeinrichtung der Verfahreinheit ausgebildeten oder angeordneten Arm schwenkbeweglich angeordnet sein. Es besteht dabei die Möglichkeit, dass die schwenkbewegliche Anordnung des Kraftaufnehmers durch schwenkbewegliche Ausführung des Arms an der Lastaufnahmeeinrichtung verwirklicht ist. Denkbar ist ebenso, das der Arm zwei oder mehr als zwei Glieder aufweist, wobei wenigstens eines der Glieder schwenkbeweglich ausgebildet ist.

In einer überaus erfolgversprechenden Ausführungsform der Erfindung erfolgt zudem die pneumatisch betätigte, schwenkbewegliche Anordnung des Kraftaufnehmers an der Verfahreinheit über einen eine Schwenkeinheit aufweisenden Pneumatikzylinder. Der Kraftaufnehmer wäre hierbei entsprechend mittelbar, z. B. über einen Arm, oder unmittelbar an der Schwenkeinheit angeordnet.

Ferner stellt es sich als praxisgerecht dar, wenn der Pneumatikzylinder an dem der Lastaufnahmeeinrichtung abgewandten Ende des Arms angeordnet ist, sodass der Arm selbst in vorteilhafter Weise nicht schwenkbeweglich ausgeführt werden müsste, sondern eine schwenkbewegliche Anordnung des Kraftaufnehmers insbesondere durch ein kommerziell verfügbares Bauteil realisiert werden kann.

Eine vielversprechende Ausbildung der Erfindung ist dabei dadurch gekennzeichnet, dass der die Schwenkeinheit aufweisende Pneumatikzylinder ein Pneumatik-Kraftspanner ist, welcher ein kommerziell erhältliches Bauteil darstellt, das eine pneumatisch betätigte Schwenkbewegung des Kraftaufnehmers in vorteilhaft einfacher Weise und somit eine Kostenreduzierung der Anlage ermöglicht.

Als gewinnbringend ist es überdies anzusehen, wenn die Verfahreinrichtung - wenigstens - einen Präzisionsdruckregler zur Beaufschlagung der Verfahreinheit mit einem Druck aufweist. Über diesen Präzisionsdruckregler lässt sich der auf die Verfahreinrichtung wirkende Druck überaus präzise voreinstellen und somit die Geschwindigkeit, mit welcher die Last entlang des Verfahrwegs bewegt wird, mit minimaler oder keiner Abweichung auf die Geschwindigkeit, mit welcher das Werkstück entlang des Förderwegs bewegt wird, anpassen. Weiterhin lassen sich gegebenenfalls auftretende Abweichungen der Bewegungen, insbesondere der Geschwindigkeit der Bewegungen von Last und Werkstück oder Lastaufnahmeeinrichtung und Fördereinrichtung, die über den Kraftaufnehmer detektiert werden, rückkoppelnd geregelt ausgleichen.

In einer weiteren vorteilhaften Weiterbildung der erfindungsgemäßen Anlage ist die Verfahreinheit ein kolbenloser Bandzylinder. Durch Ausführung der Verfahreinheit als ein kolbenloser Bandzylinder lassen sich alle an die Verfahreinheit der Verfahreinrichtung gestellten Anforderungen gewinnbringend durch ein kommerziell erhältliches Bauteil erfüllen.

Weiterhin wird die Aufgabe gelöst mit einem Verfahren gemäß den Merkmalen des Patentanspruchs 11. Die zugehörigen Unteransprüche betreffen besonders zweckmäßige Weiterbildungen der Erfindung.

Erfindungsgemäß ist somit ein Verfahren zur pneumatischen Betätigung der Verfahreinheit der Anlage vorgesehen, wobei die Verfahreinheit über den Präzisionsdruckregler mit einem Druck beaufschlagt wird und hierbei die Höhe des Drucks eine Geschwindigkeit der Bewegung der Lastaufnahmeeinrichtung und/oder der Last bewirkt, welche der Geschwindigkeit der Bewegung des Werkstücks und/oder der Fördereinrichtung entspricht. Eine gegenseitige Beeinflussung von Fördereinrichtung und Verfahreinheit kann somit weitgehend vermieden werden, wobei insbesondere der Verschleiß an der Fördereinrichtung vorteilhaft minimiert werden kann, da über diese keine Kraft zur Betätigung der Verfahreinheit und somit der Bewegung der Last und/oder der Lastaufnahmeeinrichtung aufgebracht werden muss.

Erfindungsgemäß ist darüber hinaus zudem vorgesehen, dass der Kraftaufnehmer entgegen der Lastaufnahmeeinrichtung verschwenkt wird, wenn die Last und/oder die Lastaufnahmeeinrichtung das entgegen des Verfahrwegs gelegene Ende der Verfahreinheit erreicht, wodurch vorteilhaft ein erneutes Antasten eines Werkstücks und/oder einer Fördereinrichtung ermöglicht wird. Hierbei ist denkbar, dass das Erreichen des Endes der Verfahreinheit über einen an dem entgegen des Verfahrwegs gelegenen Ende der Verfahreinheit angeordneten Endschalter detektiert wird.

Es stellt sich weiterhin als günstig dar, wenn der über den Präzisionsdruckregler auf die Verfahreinheit beaufschlagte Druck auf Basis der Antastung - oder auch des Kontakts - des Kraftaufnehmers an die Fördereinrichtung und/oder das Werkstück variiert wird, sodass die Verfahreinheit eine minimale Kraftwirkung auf das Fördermittel ausübt. Hierdurch kann es ermöglicht werden, während der Bewegung der Last und/oder der Lastaufnahmeeinrichtung wirkende Störkräfte, wie z. B. bei der Voreinstellung des Drucks nicht berücksichtigbare Reibkräfte, durch eine Regelung des über den Präzisionsdruckregler auf die Verfahreinheit beaufschlagten Drucks auszugleichen und somit eine zwischen Last und Werkstück auftretende Differenzgeschwindigkeit zu vermeiden.

In einer besonders vorteilhaften Weiterbildung des erfindungsgemäßen Verfahrens wird die Bewegung der Last und/oder der Lastaufnahmeeinrichtung in Richtung des Verfahrwegs durch Antastung - oder auch durch Kontakt - des Kraftaufnehmers am Werkstück und/oder der Fördereinrichtung eingeleitet.

Eine Ausführungsform der Erfindung ist auch dann als gewinnbringend gekennzeichnet, wenn der Kraftaufnehmer in Richtung der Lastaufnahmeeinrichtung verschwenkt und die Last und/oder die Lastaufnahmeeinrichtung entgegen des Verfahrwegs rückbewegt wird, wenn die Last und/oder die Lastaufnahmeeinrichtung das in Richtung des Verfahrwegs gelegene Ende der Verfahreinheit erreicht. Hierdurch kann vorteilhaft eine Kollision des Kraftaufnehmers mit dem Werkstück und/oder der Fördereinrichtung vermieden werden und die Verfahreinheit in eine Ausgangsstellung respektive die Last und/oder die Lastaufnahmeeinrichtung an das entgegen des Verfahrwegs gelegene Ende der Verfahreinheit rückbewegt werden, um eine weitere Manipulation und/oder Vermessung eines Werkstücks durchführen zu können. Das Erreichen des Endes der Verfahreinheit kann hierbei z. B. über einen an dem in Richtung des Verfahrwegs gelegenen Ende der Verfahreinheit angeordneten Endschalter detektiert werden.

Die Erfindung lässt zahlreiche Ausführungsformen zu. Zur weiteren Verdeutlichung ihres Grundprinzips ist eine davon in der Zeichnung dargestellt und wird nachfolgend beschrieben.

Diese zeigt in
- Fig. 1: eine Weiterbildung der Anlage;
- Fig. 2a, 2b: einen Bewegungsablauf der Anlage;
- Fig. 3: einen Pneumatikschaltplan.

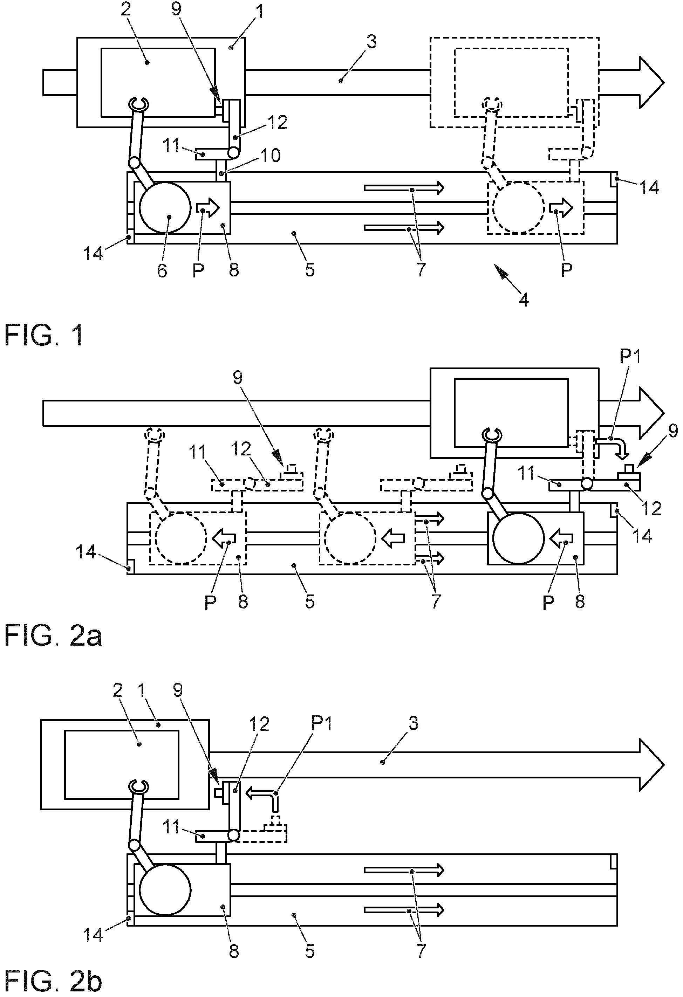

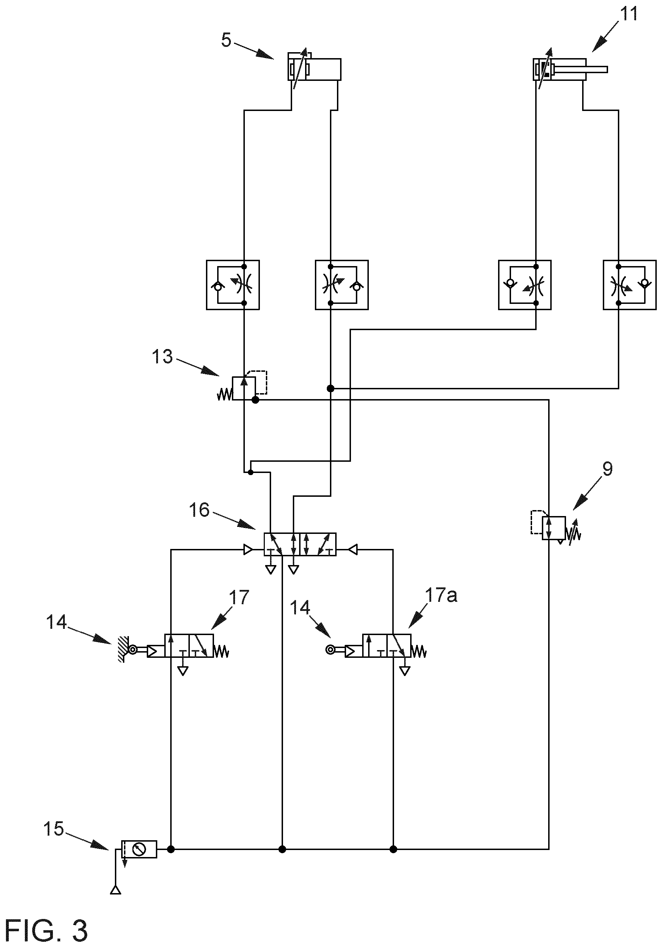

Figur 1 zeigt eine Weiterbildung der Anlage, wobei diese die Fördereinrichtung 1 zur Bewegung des Werkstücks 2 entlang des Förderwegs 3 sowie die Verfahreinrichtung 4 mit der Verfahreinheit 5 zur Bewegung der Last 6 entlang des zum Förderweg 3 benachbart ausgeführten Verfahrwegs 7 aufweist. Hierbei weist die Verfahreinheit 5 zur Aufnahme der Last 6, welche als ein Industrieroboter mit einem Greifwerkzug ausgeführt ist, zudem die Lastaufnahmeeinrichtung 8 und die Anlage zur Kopplung der Bewegungen von Werkstück 2 und Last 6 entlang des Förderwegs 3 und des Verfahrwegs 7 sowie den an der Lastaufnahmeeinrichtung 8 angeordneten Kraftaufnehmer 9 auf. Die Lastaufnahmeeinrichtung 8 ist dabei durch pneumatische Betätigung der als ein kolbenstangenloser Bandzylinder ausgeführten Verfahreinheit 5 bewegbar ausgebildet. Die Lastaufnahmeeinrichtung 8, welche entsprechend mit dem Kolben des Bandzylinders verbunden ist, weist zudem den Arm 10 auf, über welchen der Kraftaufnehmer 9 mittelbar an der Verfahreinheit 5 angeordnet ist. Die mittelbare Anordnung erfolgt hierbei unter pneumatischer Betätigung des an dem der Lastaufnahmeeinrichtung 8 abgewandten Ende des Arms 10 angeordneten Pneumatikzylinders 11 in schwenkbeweglicher Weise, wofür der Pneumatikzylinder 11 die Schwenkeinheit 12 aufweist, an welcher wiederum der Kraftaufnehmer 9 angeordnet ist. Der Kraftaufnehmer 9 ist dabei in der Darstellung der Figur 1 entgegen der Lastaufnahmeeinrichtung 8 verschwenkt und tastet das Werkstück 2 an. Die Betätigung der Verfahreinheit 5 und somit die Bewegung der Lastaufnahmeeinrichtung 8 sowie des Pneumatikzylinders 11 erfolgt in Abhängigkeit der Aktivierung der an den jeweiligen Enden der Verfahreinheit 5 angeordneten Endschalter 14. Hierbei aktiviert die Lastaufnahmeeinrichtung 8 in dieser Darstellung den am entgegen des Verfahrwegs 7 gelegenen Ende der Verfahreinheit 5 angeordneten Endschalter 14. Die Antastung des Werkstücks 2 durch den Kraftaufnehmer 9 leitet nun die über die gestrichelte Darstellung angedeutete Bewegung der Verfahreinheit 5 mit der Fördereinrichtung 1 ein, wobei die Lastaufnahmeeinrichtung 8 den am in Richtung des Verfahrwegs 7 gelegenen Ende der Verfahreinheit 5 angeordneten Endschalter 14 noch nicht erreicht hat. Zu der dargestellten pneumatischen Betätigung der Verfahreinheit 5 wird die Verfahreinheit 5 hierbei über den in Figur 3 dargestellten Präzisionsdruckregler 13 mit einem Druck beaufschlagt, wobei die Höhe des Drucks eine Geschwindigkeit der Bewegung der Lastaufnahmeeinrichtung 8 sowie der Last 6 bewirkt, welche der Geschwindigkeit der Bewegung des Werkstücks 2 und der Fördereinrichtung 1 entspricht. Die Bewegung erfolgt dabei in Richtung des Pfeils P und somit in Richtung des Verfahrwegs 7 sowie des Förderwegs 3.

Die Figuren 2a und 2b beschreiben einen Bewegungsablauf der Anlage, wobei die in Figur 2a in Volllinie dargestellte Lastaufnahmeeinrichtung 8 das in Richtung des Verfahrwegs 7 gelegene Ende der Verfahreinheit 5 erreicht hat und hierbei den Endschalter 14 aktiviert, wodurch der Kraftaufnehmer 9 über die Schwenkeinheit 12 des Pneumatikzylinders 11 in Richtung der Lastaufnahmeeinrichtung 8 verschwenkt wird, was über den Pfeil P1 angedeutet ist. Anschließend werden die Last 6 sowie die Lastaufnahmeeinrichtung 8 entgegen des Verfahrwegs 7 rückbewegt. Diese Rückbewegung in Richtung des Pfeils P, entgegen des Verfahrwegs 7, ist über die gestrichelte Darstellung angedeutet. Hierbei hat die in gestrichelter Darstellung aufgezeigte Lastaufnahmeeinrichtung 8 den am entgegen des Verfahrwegs 7 gelegenen Ende der Verfahreinheit 5 angeordneten Endschalter 14 noch nicht erreicht, wodurch sich der an der Schwenkeinheit 12 angeordnete Kraftaufnehmer 9 noch in in Richtung der Lastaufnahmeeinrichtung 8 verschwenktem Zustand befindet. Die Darstellung in Figur 2b zeigt hingegen dieses Erreichen des entgegen des Verfahrwegs 7 gelegenen Endes der Verfahreinheit 5 durch die Lastaufnahmeeinrichtung 8, wobei diese den an diesem Ende der Verfahreinheit 5 angeordneten Endschalter 14 aktiviert. Die Aktivierung des Endschalters 14 leitet hierbei das über den Pfeil P1 angedeutete Verschwenken des Kraftaufnehmers 9 entgegen der Lastaufnahmeeinrichtung 8 ein, wodurch eine sich dem Kraftaufnehmer 9 nähernde Fördereinrichtung 1 mit dem Werkstück 2 erneut angetastet werden kann. Dies ist hierbei in der Darstellung der Figur 2b noch nicht erfolgt, sodass sich die Verfahreinheit 5 respektive die Lastaufnahmeeinrichtung 8 noch in einem Ruhezustand befindet.

In Figur 3 ist zudem ein Pneumatikschaltplan aufgezeigt, welcher eine mögliche pneumatische Betätigung der Verfahreinheit 5 sowie des Pneumatikzylinders 11 verdeutlicht. Die Druckversorgung 15 wirkt hierbei auf die über die Endschalter 14 betätigten 3/2-Wegeventile 17, 17a, die ihrerseits der Betätigung des 5/2-Wegeventils 16 dienen, auf welches ebenfalls die Druckversorgung 15 wirkt. Weiterhin ist die Druckversorgung 15 mit dem Kraftaufnehmer 9 respektive mit einem durch den Kraftaufnehmer 9 gesteuerten Druckregelventil wirkverbunden. Der Kraftaufnehmer 9 respektive das durch den Kraftaufnehmer 9 gesteuerte Druckregelventil beeinflusst den durch den Präzisionsdruckregler 13 auf die Verfahreinheit 5 beaufschlagten Druck, wobei der Präzisionsdruckregler 13 über das sich in seiner ersten Schaltstellung befindliche 5/2-Wegeventil 16 mit dem Versorgungsdruck der Druckversorgung 15 beaufschlagt wird, wenn das 3/2-Wegeventil 17 durch den Endschalter 14, welcher der am entgegen des Verfahrwegs 7 gelegenen Ende der Verfahreinheit 5 angeordnete Endschalter 14 ist, betätigt wird und sich das 3/2-Wegeventil 17 somit ebenfalls in seiner ersten Schaltstellung befindet. Somit wird bei Betätigung des Kraftaufnehmers 9 sowie des am entgegen des Verfahrwegs 7 gelegenen Ende der Verfahreinheit 5 angeordneten Endschalters 14 die erste Seite der als Bandzylinder ausgebildeten Verfahreinheit 5 mit dem über den Präzisionsdruckregler 13 zur Verfügung gestellten Druck beaufschlagt, was eine Bewegung der in den Figuren 1 sowie 2a und 2b dargestellten Last 6 und/oder der Lastaufnahmeeinrichtung 8 in Richtung des Verfahrwegs 7 initiiert. Hierfür ist die zweite Seite der Verfahreinheit 5 über das 5/2-Wegeventil 16 in erster Schaltstellung drucklos geschaltet. Aufgrund der Parallelschaltung des doppelwirkenden Pneumatikzylinders 11 ist der Kraftaufnehmer 9 in erster Schaltstellung des 5/2-Wegeventils 16 aufgrund der Druckbeaufschlagung der ersten Seite des Pneumatikzylinders 11 der Lastaufnahmeeinrichtung 8 entgegengesetzt verschwenkt und ein Antasten der ebenfalls in den Figuren 1 sowie 2a und 2b aufgezeigten Fördereinrichtung 1 und/oder des Werkstücks 2 und demzufolge die Bewegung der Lastaufnahmeeinrichtung 8 in Richtung des Verfahrwegs 7 wird somit ermöglicht. Erreicht die Last 6 und/oder die Lastaufnahmeeinrichtung 8 den am in Richtung des Verfahrwegs 7 gelegenen Ende der Verfahreinheit 5 angeordneten Endschalter 14, durch welchen das 3/2-Wegeventil 17a betätigt wird, wird das 5/2-Wegenventil 16 in seine zweite Schaltstellung überführt und einerseits die zweite Seite des Pneumatikzylinders 11 mit dem Versorgungdruck beaufschlagt sowie die erste Seite des Pneumatikzylinders 11 drucklos geschaltet, wodurch der Kraftaufnehmer 9 in Richtung der Lastaufnahmeeinrichtung 8 verschwenkt wird. Weiterhin erfolgt ebenfalls die Beaufschlagung der zweiten Seite der Verfahreinheit 5 mit dem Versorgungsdruck, wohingegen die erste Seite der Verfahreinheit 5 drucklos geschaltet wird. Dies bedingt die Rückbewegung der Last 6 und/oder der Lastaufnahmeeinrichtung 8 entgegen des Verfahrwegs 7.

### Bezugszeichenliste

- 1: Fördereinrichtung
- 2: Werkstück
- 3: Förderweg
- 4: Verfahreinrichtung
- 5: Verfahreinheit

- 6: Last
- 7: Verfahrweg
- 8: Lastaufnahmeeinrichtung
- 9: Kraftaufnehmer
- 10: Arm

- 11: Pneumatikzylinder
- 12: Schwenkeinheit
- 13: Präzisionsdruckregler
- 14: Endschalter
- 15: Druckversorgung

- 16: 5/2-Wegeventil
- 17: 3/2-Wegeventil
- 17a: 3/2-Wegeventil

- P: Pfeil
- P1: Pfeil

## Patentansprüche

1. Anlage aufweisend eine Fördereinrichtung (1) zur Bewegung eines Werkstücks (2) entlang eines Förderwegs (3) sowie aufweisend eine Verfahreinrichtung (4) mit einer Verfahreinheit (5) zur Bewegung einer Last (6) entlang eines zum Förderweg (3) benachbart ausgeführten Verfahrwegs (7), wobei die Verfahreinheit (5) zur Aufnahme der Last (6) eine Lastaufnahmeeinrichtung (8) und die Anlage zur Kopplung der Bewegungen von Werkstück (2) und Last (6) entlang des Förderwegs (3) und des Verfahrwegs (7) zumindest einen Messaufnehmer aufweisen, wobei der Messaufnehmer ein an der Lastaufnahmeeinrichtung (8) angeordneter Kraftaufnehmer (9) ist und die Lastaufnahmeeinrichtung (8) durch pneumatische Betätigung der Verfahreinheit (5) bewegbar ausgebildet ist, **dadurch gekennzeichnet, dass** an den Enden der Verfahreinheit (5) je wenigstens ein Endschalter (14) angeordnet ist und die Betätigung der Verfahreinheit (5) und/oder eines Pneumatikzylinders (11) in Abhängigkeit der Aktivierung der Endschalter (14) erfolgt, wobei durch Aktivierung des, am in Richtung des Verfahrwegs (7) gelegenen Ende der Verfahreinheit (5), angeordneten Endschalters (14) die Last (6) sowie die Lastaufnahmeeinrichtung (8) entgegen des Verfahrwegs (7) rückbewegt werden.

2. Anlage nach Anspruch 1, **dadurch gekennzeichnet, dass** die Lastaufnahmeeinrichtung (8) einen Arm (10) aufweist, über welchen der Kraftaufnehmer (9) an der Verfahreinheit (5) angeordnet ist.

3. Anlage nach den Ansprüchen 1 oder 2, **dadurch gekennzeichnet, dass** der Kraftaufnehmer (9) über eine pneumatische Betätigung schwenkbeweglich an der Verfahreinheit (5) angeordnet ist.

4. Anlage nach zumindest einem der vorangehenden Ansprüche, **dadurch gekennzeichnet, dass** die pneumatisch betätigte, schwenkbewegliche Anordnung des Kraftaufnehmers (9) an der Verfahreinheit (5) über den eine Schwenkeinheit (12) aufweisenden Pneumatikzylinder (11) erfolgt.

5. Anlage nach zumindest einem der vorangehenden Ansprüche, **dadurch gekennzeichnet, dass** der Pneumatikzylinder (11) an dem der Lastaufnahmeeinrichtung (8) abgewandten Ende des Arms (10) angeordnet ist.

6. Anlage nach zumindest einem der vorangehenden Ansprüche, **dadurch gekennzeichnet, dass** der die Schwenkeinheit (12) aufweisende Pneumatikzylinder (11) ein Pneumatik-Kraftspanner ist.

7. Anlage nach zumindest einem der vorangehenden Ansprüche, **dadurch gekennzeichnet, dass** die Verfahreinrichtung (4) einen Präzisionsdruckregler (13) zur Beaufschlagung der Verfahreinheit (5) mit einem Druck aufweist.

8. Anlage nach zumindest einem der vorangehenden Ansprüche, **dadurch gekennzeichnet, dass** die Verfahreinheit (5) ein kolbenloser Bandzylinder ist

9. Verfahren zur pneumatischen Betätigung der Verfahreinheit (5) der Anlage nach zumindest einem der vorangehenden Ansprüche, wobei die Verfahreinheit (5) über einen Präzisionsdruckregler (13) mit einem Druck beaufschlagt wird und die Höhe des Drucks eine Geschwindigkeit der Bewegung der Lastaufnahmeeinrichtung (8) und/oder der Last (6) bewirkt, welche der Geschwindigkeit der Bewegung des Werkstücks (2) und/oder der Fördereinrichtung (1) entspricht, **dadurch gekennzeichnet, dass** der Kraftaufnehmer (9) durch Aktivierung des, am entgegen des Verfahrwegs (7) gelegenen Ende der Verfahreinheit (5), angeordneten Endschalters (14) entgegen der Lastaufnahmeeinrichtung (8) verschwenkt wird, wenn die Last (6) und/oder die Lastaufnahmeeinrichtung (8) das entgegen des Verfahrwegs (7) gelegene Ende der Verfahreinheit (5) erreicht.

10. Verfahren nach Anspruch 9, **dadurch gekennzeichnet, dass** der über den Präzisionsdruckregler (13) auf die Verfahreinheit (5) beaufschlagte Druck auf Basis der Antastung des Kraftaufnehmers (9) an die Fördereinrichtung (1) und/oder das Werkstück (2) variiert wird, sodass die Verfahreinheit (5) eine minimale Kraftwirkung auf die Fördereinrichtung (1) ausübt.

11. Verfahren nach zumindest einem der Ansprüche 9 oder 10, **dadurch gekennzeichnet, dass** die Bewegung der Last (6) und/oder der Lastaufnahmeeinrichtung (8) in Richtung des Verfahrwegs (7) durch Antastung des Kraftaufnehmers (9) am Werkstück (2) und/oder der Fördereinrichtung (1) eingeleitet wird.

12. Verfahren nach zumindest einem der Ansprüche 9 bis 11, **dadurch gekennzeichnet, dass** der Kraftaufnehmer (9) in Richtung der Lastaufnahmeeinrichtung (8) verschwenkt und die Last (6) und/oder die Lastaufnahmeeinrichtung (8) entgegen des Verfahrwegs (7) rückbewegt wird, wenn die Last (6) und/oder die Lastaufnahmeeinrichtung (8) das in Richtung des Verfahrwegs (7) gelegene Ende der Verfahreinheit (5) erreicht.

## Claims

1. System comprising a conveyor device (1) for moving a workpiece (2) along a conveyor path (3) and comprising a travel device (4) having a travel unit (5) for moving a load (6) along a travel path (7) that is adjacent to the conveyor path (3), the travel unit (5) having a load-receiving device (8) for receiving the load (6) and the system having at least one measuring sensor for coupling the movements of the workpiece (2) and the load (6) along the conveyor path (3) and the travel path (7), the measuring sensor being a force sensor (9) arranged on the load-receiving device (8) and the load-receiving device (8) being designed to be movable by pneumatic actuation of the travel unit (5),**characterized in that** at least one limit switch (14) is arranged at each end of the travel unit (5) and the actuation of the travel unit (5) and/or a pneumatic cylinder (11) takes place depending on the activation of the limit switches (14), the load (6) and the load-receiving device (8) being moved back counter to the travel path (7) by activation of the limit switch (14) arranged at the end of the travel unit (5) located in the direction of the travel path (7).

2. System according to claim 1, **characterized in that** the load-receiving device (8) has an arm (10) via which the force sensor (9) is arranged on the travel unit (5).

3. System according to claim 1 or 2, **characterized in that** the force sensor (9) is pivotably arranged on the travel unit (5) via a pneumatic actuation.

4. System according to at least one of the preceding claims,
**characterized in that** the pneumatically actuated, pivotable arrangement of the force sensor (9) on the travel unit (5) is effected via the pneumatic cylinder (11) having a pivoting unit (12).

5. System according to at least one of the preceding claims,
**characterized in that** the pneumatic cylinder (11) is arranged at the end of the arm (10) remote from the load-receiving device (8).

6. System according to at least one of the preceding claims,
**characterized in that** the pneumatic cylinder (11) having the pivoting unit (12) is a pneumatic power clamp.

7. System according to at least one of the preceding claims,
**characterized in that** the travel device (4) has a precision pressure regulator (13) for applying pressure to the travel unit (5).

8. System according to at least one of the preceding claims,
**characterized in that** the travel unit (5) is a pistonless band cylinder.

9. Method for pneumatically actuating the travel unit (5) of the system according to at least one of the preceding claims, the travel unit (5) being pressurized via a precision pressure regulator (13) and the level of the pressure causing a speed of movement of the load-receiving device (8) and/or the load (6) which corresponds to the speed of movement of the workpiece (2) and/or the conveyor device (1),**characterized in that** the force sensor (9) is pivoted with respect to the load-receiving device (8) by activation of the limit switch (14) arranged at the end of the travel unit (5) opposite the travel path (7) when the load (6) and/or the load-receiving device (8) reaches the end of the travel unit (5) located opposite the travel path (7).

10. Method according to claim 9, **characterized in that** the pressure applied to the travel unit (5) via the precision pressure regulator (13) is varied on the basis of the contact of the force sensor (9) on the conveyor device (1) and/or the workpiece (2), so that the travel unit (5) exerts a minimal force on the conveyor device (1).

11. Method according to at least one of claims 9 or 10, **characterized in that** the movement of the load (6) and/or the load-receiving device (8) in the direction of the travel path (7) is initiated by contact of the force sensor (9) on the workpiece (2) and/or the conveyor device (1).

12. Method according to at least one of claims 9 to 11, **characterized in that** the force sensor (9) is pivoted in the direction of the load-receiving device (8) and the load (6) and/or the load-receiving device (8) is moved back counter to the travel path (7) when the load (6) and/or the load-receiving device (8) reaches the end of the travel unit (5) located in the direction of the travel path (7).

## Revendications

1. Installation présentant un dispositif de transport (1) permettant le mouvement d'une pièce à usiner (2) le long d'une voie de transport (3) ainsi que présentant un dispositif de déplacement (4) comportant une unité de déplacement (5) permettant le mouvement d'une charge (6) le long d'une voie de déplacement (7) réalisée au voisinage de la voie de transport (3), dans laquelle l'unité de déplacement (5) permettant la réception de la charge (6) présente un dispositif de réception de charge (8) et l'installation permettant l'accouplement des mouvements de la pièce à usiner (2) et de la charge (6) le long de la voie de transport (3) et de la voie de déplacement (7) présente au moins un capteur de mesure, dans laquelle le capteur de mesure est un capteur de force (9) disposé sur le dispositif de réception de charge (8) et le dispositif de réception de charge (8) est conçu de manière à être mobile par actionnement pneumatique de l'unité de déplacement (5), **caractérisée en ce que qu'au** moins un interrupteur de fin de course (14) est disposé à chacune des extrémités de l'unité de déplacement (5) et l'actionnement de l'unité de déplacement (5) et/ou d'un vérin pneumatique (11) s'effectue en fonction de l'activation des interrupteurs de fin de course (14), dans laquelle la charge (6) ainsi que le dispositif de réception de charge (8) sont entraînés en mouvement en arrière dans le sens opposé à la voie de déplacement (7) par l'activation de l'interrupteur de fin de course (14) disposé à l'extrémité de l'unité de déplacement (5) située dans la direction de la voie de déplacement (7).

2. Installation selon la revendication 1, **caractérisée en ce que** le dispositif de réception de charge (8) présente un bras (10) par l'intermédiaire duquel le capteur de force (9) est disposé sur l'unité de déplacement (5).

3. Installation selon les revendications 1 ou 2, **caractérisée en ce que** le capteur de force (9) est disposé de manière à pouvoir pivoter sur l'unité de déplacement (5) par l'intermédiaire d'un actionnement pneumatique.

4. Installation selon au moins l'une des revendications précédentes,
**caractérisée en ce que** l'agencement de manière à pouvoir pivoter à actionnement pneumatique du capteur de force (9) sur l'unité de déplacement (5) s'effectue par l'intermédiaire du vérin pneumatique (11) présentant une unité de pivotement (12).

5. Installation selon au moins l'une des revendications précédentes,
**caractérisée en ce que** le vérin pneumatique (11) est disposé à l'extrémité du bras (10) opposée au dispositif de réception de charge (8).

6. Installation selon au moins l'une des revendications précédentes,
**caractérisée en ce que** le vérin pneumatique (11) présentant l'unité de pivotement (12) est un tendeur de force pneumatique.

7. Installation selon au moins l'une des revendications précédentes,
**caractérisée en ce que** le dispositif de déplacement (4) présente un régulateur de pression de précision (13) permettant l'application d'une pression à l'unité de déplacement (5).

8. Installation selon au moins l'une des revendications précédentes,
**caractérisée en ce que** l'unité de déplacement (5) est un vérin à bande sans piston.

9. Procédé permettant l'actionnement pneumatique de l'unité de déplacement (5) de l'installation selon au moins l'une des revendications précédentes, dans lequel l'unité de déplacement (5) est soumise à une pression par l'intermédiaire d'un régulateur de pression de précision (13) et la valeur de la pression provoque une vitesse de mouvement du dispositif de réception de charge (8) et/ou de la charge (6) qui correspond à la vitesse de mouvement de la pièce à usiner (2) et/ou du dispositif de transport (1), **caractérisé en ce que** le capteur de force (9) est pivoté contre le dispositif de réception de charge (8) par activation de l'interrupteur de fin de course (14) disposé à l'extrémité de l'unité de déplacement (5) située à l'opposé de la voie de déplacement (7), lorsque la charge (6) et/ou le dispositif de réception de charge (8) atteint l'extrémité de l'unité de déplacement (5) située à l'opposé de la voie de déplacement (7).

10. Procédé selon la revendication 9, **caractérisé en ce que** la pression appliquée à l'unité de déplacement (5) par l'intermédiaire du régulateur de pression de précision (13) est modifiée sur la base du palpage du capteur de force (9) avec le dispositif de transport (1) et/ou la pièce à usiner (2), de sorte que l'unité de déplacement (5) exerce une action de force minimale sur le dispositif de transport (1).

11. Procédé selon au moins l'une des revendications 9 ou 10,
**caractérisé en ce que** le mouvement de la charge (6) et/ou du dispositif de réception de charge (8) en direction de la voie de déplacement (7) est initié par palpage du capteur de force (9) sur la pièce à usiner (2) et/ou le dispositif de transport (1).

12. Procédé selon au moins l'une des revendications 9 à 11,
**caractérisé en ce que** le capteur de force (9) pivote en direction du dispositif de réception de charge (8) et la charge (6) et/ou le dispositif de réception de charge (8) est entraîné(e) en mouvement en arrière à l'encontre de la voie de déplacement (7) lorsque la charge (6) et/ou le dispositif de réception de charge (8) atteint l'extrémité de l'unité de déplacement (5) située dans la direction de la voie de déplacement (7).
